# FASCICULE DE BREVET EUROPEEN

(11) **EP 3 056 628 B1**
(45) Date de publication et mention de la délivrance du brevet: **04.08.2021**
(21) Numéro de dépôt: 16154845.8
(22) Date de dépôt: 09.02.2016
(51) Int. Cl.: E04B 9/30, E04B 9/04

(54) **NAPPE POUR STRUCTURE À TOILE TENDUE BORDÉE PAR PLUSIEURS HARPONS AUX RACCORDEMENTS AMÉLIORÉS**
TISCHDECKE STRUKTUR LEINWAND MIT MEHREREN HAKEN ZU VERBESSERTEN VERBINDUNGEN EINGEFASST
TABLECLOTH STRUCTURE CANVAS LINED WITH SEVERAL HARPOONS TO IMPROVED CONNECTIONS

(30) Priorité: 13.02.2015 FR 1551176
(43) Date de publication de la demande: 17.08.2016
(73) Titulaire: Normalu, 68680 Kembs (FR)
(72) Inventeur: SCHERRER, Jean-Marc, 68400 RIEDISHEIM (FR)
(74) Mandataire: IP Trust

(56) Documents cités:
- EP-A- 0 215 715
- None

## Description

### DOMAINE TECHNIQUE DE L'INVENTION

L'invention concerne une structure en toiles tendues destinée à constituer, à l'intérieur d'un local, au moins un élément de paroi.

L'ensemble est destiné notamment, mais non exclusivement, à réaliser des caissons ainsi que des faux-plafonds et faux-murs, lumineux ou non.

### ETAT DE LA TECHNIQUE

Il est répandu d'utiliser pour la réalisation de fausses parois ou de caissons suspendus, des toiles tendues en polymère du fait de leurs multiples qualités. De telles toiles sont en effet notamment faciles d'entretien et étanches.

La toile 2 porte, sur tous ses bords, un harpon 6 réalisé en matière plastique élastique et formant un crochet s'ouvrant vers l'intérieur de la toile.

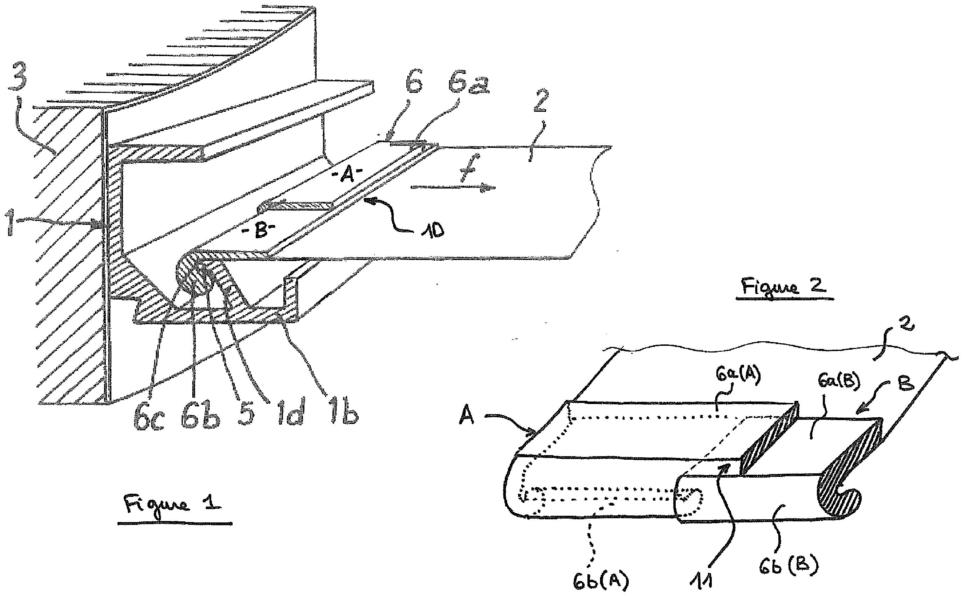

Ce harpon 6 comporte une partie mince 6a par laquelle il est fixé à la toile 2, cette partie mince étant prolongée vers l'extérieur et sous la toile 2 par une partie plus épaisse 6b constituant un bourrelet. Ce bourrelet a une forme arrondie ou angulaire. La partie mince 6a et le bourrelet 6b délimitent entre eux une rainure 6c qui s'ouvre vers le centre de la toile 2. Cette rainure est destinée à recevoir l'épaulement horizontal 5 lorsque la toile 2 est tendue à l'intérieur du cadre, comme il est représenté sur la figure 1.

Lorsque les dimensions de la toile à fixer le requièrent, il est nécessaire d'utiliser plusieurs harpons de ce type le long d'un bord de la toile. Conformément à la figure 1, un raccord ou jonction 10 doit alors être effectué entre deux harpons successifs.

Conformément à la figure 2, il est connu pour procéder à une telle jonction entre deux harpons adjacents A, B, de modifier un harpon de type ci-dessus en supprimant une partie du bourrelet 6b à partir de l'une des extrémités du harpon A, afin de pourvoir ce harpon modifié A d'une extrémité 11 uniquement pourvue d'une partie mince 6a(A) qui viendra recouvrir la partie mince correspondante 6a(B) du harpon adjacent B, tandis que le bourrelet court 6b(A) de ce harpon modifié A viendra s'appliquer contre le bourrelet 6b(B) du harpon normal adjacent B.

Ainsi, le procédé de création d'un raccord entre deux harpons A, B consiste :
- à déligner un harpon de type standard c'est à dire à couper la partie épaisse du harpon (6b) sur 30 mm environ à la pince coupante, depuis l'extrémité du harpon pour former une extrémité pourvue uniquement d'une partie mince 6a(A) et une portion restante pourvue d'un bourrelet raccourci 6b(A) et d'une partie mince 6a(A)
- superposer la partie mince d'extrémité du harpon modifié sans bourrelet 6a(A), au dessus de la partie mince du harpon standard alors que les deux parties minces des deux harpons A, B sont disposées le long du bord de la toile,
- souder les deux harpons A, B avec leurs parties minces superposées sur une zone, sur la toile,
- terminer la liaison entre les deux parties minces des deux harpons en les collant l'une à l'autre avec de la colle.

Ce procédé usuel rend possible la fixation au cadre de toiles de grandes dimensions en utilisant les longueurs cumulées de harpons ainsi raccordés.

Cependant il présente l'inconvénient de nécessiter de déligner la partie épaisse du harpon ajouté A à la pince coupante, de coller les deux parties minces superposées des deux harpons qui constituent des étapes supplémentaires venant s'ajouter au soudage de ces harpons sur la toile.

En outre, l'étape de collage des deux parties minces superposées des deux harpons présente le risque de déposer de la colle sur la toile et de la rendre inutilisable.

De plus, les parties minces superposées génèrent plus de difficultés lors du montage et du démontage vis à vis du cadre, du fait de la surépaisseur de matière qu'elles forment en étant superposées.

Egalement, pour éviter toute fissure de la toile au niveau du raccord qui constitue par nature une zone très fragile, il est nécessaire de mettre une pince de maintien du raccord lors du montage de la toile.

L'invention vise à remédier à ces problèmes en proposant un procédé de fabrication d'un raccord de deux harpons adjacents d'un dispositif de mise sous tension d'une toile sans surépaisseur, robuste et ne ralentissant pas la fabrication de ce dispositif.

L'invention a également pour objet la toile à harpons raccordée ainsi obtenue et l'ensemble formant une fausse paroi ou caisson suspendu comprenant une telle toile.

### OBJET DE L'INVENTION

A cet effet, et selon un premier aspect, l'invention propose une nappe pour structure à toiles tendues de réalisation d'un faux plafond ou d'un caisson suspendu dans un local, comprenant au moins une toile souple et au moins deux harpons (B) fixés le long d'un bord périphérique de la toile en étant adjacents l'un à l'autre, ces harpons étant destinés à fixer la toile à un cadre.

Selon l'invention, la nappe comprend une bande de renfort fixée à cheval sur les deux harpons qui sont juxtaposés l'un contre l'autre.

Selon d'autres caractéristiques intéressantes de la nappe selon l'invention :
- la bande de renfort est constituée en un matériau présentant une température de fusion inférieure ou égale à celle des deux harpons (B) et avec des propriétés mécaniques de résistance à la traction supérieure à celle de la toile.
- la bande de renfort est soudée aux harpons.

L'invention concerne également une structure à toiles tendue de réalisation d'un faux plafond ou d'un caisson suspendu dans un local, comprenant au moins un cadre et une nappe ci-dessus, les harpons de la nappe s'engageant dans des éléments complémentaires du cadre pour tendre la toile vis à vis du cadre.

L'invention concerne également le procédé de fabrication d'une nappe pour structure à toiles tendues de réalisation d'un faux plafond ou d'un caisson suspendu dans un local, la nappe comprenant au moins une toile souple (2) et au moins deux harpons (B) fixés le long d'un bord périphérique de la toile en étant adjacents l'un à l'autre, ces harpons étant destinés à fixer la toile à un cadre, dans lequel :
- on positionne bord à bord les deux harpons en les disposant le long du bord périphérique de la toile
- on positionne une bande de renfort à cheval sur les deux harpons adjacents, la bande étant constituée en un matériau présentant une température de fusion inférieure ou égale à celle des deux harpons (B) et avec des propriétés mécaniques de résistance à la traction supérieure à celle de la toile,
- on soude dans une même opération la toile, les deux harpons et la bande.

Selon une caractéristique avantageuse, l'opération de soudage est un soudage haute fréquence, les deux harpons, la toile et la bande étant disposés au sein d'une machine haute fréquence.

### BREVE DESCRIPTION DES FIGURES

D'autres objets et avantages de l'invention apparaîtront au cours de la description qui suit, faite en référence aux dessins annexés, dans lesquels :
- la figure 1 précitée représente une vue en perspective de côté et avec arrachement, d'un dispositif de mise en tension d'une toile selon l'art antérieur, composé d'une toile portant sur son bord périphérique un harpon en prise sur un élément complémentaire d'un cadre fixé à un support ;
- la figure 2 représente une vue en perspective du dispositif de la figure 1, sans cadre ni support,
- la figure 3 représente le dispositif de mise en tension d'une toile selon l'invention.

Pour plus de clarté, les éléments identiques ou similaires des différents exemples de réalisation sont repérés par des signes de référence identiques sur l'ensemble des figures.

### DESCRIPTION DETAILLEE DES FIGURES

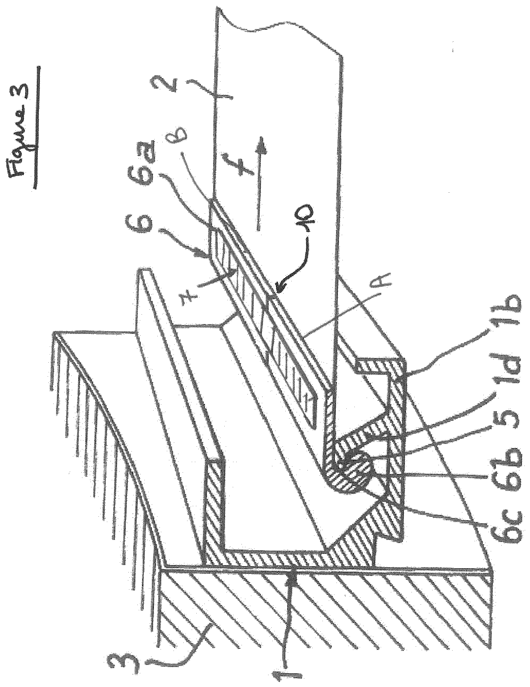

En relation avec la figure 3, il est décrit une structure destinée à constituer, à l'intérieur d'un local, au moins un élément de paroi. Plus particulièrement, la structure illustrée constitue un caisson apte à être fixé sur un plafond par l'intermédiaire de moyens de fixation appropriés connus de l'homme du métier (suspentes, etc.).

Cette structure comprend une toile 2 montée sur un cadre 1 fixé à un support 3, par l'intermédiaire d'un harpon 6 réalisé par exemple en matière plastique élastique et qui forme un crochet s'ouvrant vers l'intérieur de la toile.

Bien que cela ne soit pas représenté, le harpon 6 entoure les bords périphériques de la toile pour la fixer à des éléments correspondants du cadre 1 qui longent le support de fixation de la structure.

Conformément à la figure 3, ce harpon 6 comporte une partie mince 6a par laquelle il est fixé à la toile 2, cette partie mince étant prolongée vers l'extérieur et sous la toile 2 par une partie plus épaisse 6b constituant un bourrelet.

Ce bourrelet a une forme arrondie ou angulaire. La partie mince 6a et le bourrelet 6b délimitent entre eux une rainure 6c qui s'ouvre vers le centre de la toile 2.

Cette rainure est destinée à recevoir l'épaulement horizontal 5 lorsque la toile 2 est tendue à l'intérieur du cadre, comme il est représenté sur la figure 1.

Afin de fixer une toile par exemple de grandes dimensions à un cadre de ce type, un raccord particulier 10 entre harpons successifs est proposé par l'invention, tel qu'illustré sur la figure 3.

Ce raccord est réalisé par la juxtaposition des deux harpons adjacents B qui présentent tous deux la même forme générale standard à partie mince 6a et bourrelet inférieur 6b, ces deux harpons standards B étant juxtaposés par leurs tranches en regard, sans espace entre ces tranches.

Une bande d'un matériau plastique présentant une température de fusion inférieure ou égale à celle des harpons généralement constitués de plastique, et présentant des propriétés mécaniques de résistance à la traction supérieure à la toile est appliquée sur les parties minces adjacentes 6a des deux harpons standards B et fixée à celles ci de façon à assurer une continuité mécanique entre les deux harpons standards B. La bande de matériau constitue une bande de renfort 7. Comme représentée sur la figure 3, la bande de renfort 7 est une bande droite, de section rectangulaire constante. Elle est disposée de manière de manière à chevaucher les deux harpons, s'étendant de part et d'autre de la ligne de jonction desdits harpons. S'agissant de raccorder et renforcer des harpons successifs, la bande de renfort est disposée pour ne s'étendre que sur lesdits harpons, ne présentant pas de recouvrement direct avec la toile 2. Elle présente des dimensions pour couvrir en tout ou partie les parties minces 6a des deux harpons 6 successifs. Dans le mode de réalisation illustré, la bande de renfort 7 présente une largeur inférieure à la largeur de la partie mince 6a de chacun des harpons 6, et s'étend par ailleurs sur presque l'ensemble de la longueur de la bordure définie par les deux harpons successifs.

La fixation de la bande de renfort 7 s'effectue par soudage de préférence haute fréquence, et avantageusement dans le même temps que chaque partie mince de harpon est fixée à la toile.

Plus précisément, pour réaliser ce raccord :
- on positionne les deux parties minces 6a des deux harpons standards B bord à bord sur une machine haute fréquence, alors que ces harpons sont disposés le long du bord périphérique d'une toile
- on ajoute un morceau de toile polymère très résistant le long des parties minces (6a) des deux parties de harpon juxtaposées sur une longueur adaptée permettant une solidarisation satisfaisante en termes de tenue mécanique.
- on soude la nappe de toile, les deux parties minces de harpon standard et la toile polymère résistante dans une même opération.

Le raccord des deux harpons s'effectue ainsi lors de la soudure de ces harpons à la toile, dans une seule et même opération.

En outre, il n'est plus nécessaire de mettre une pince comme dans l'art antérieur selon lequel il fallait pallier la fragilité existant au niveau du raccord car la résistance à la traction du raccord a été très fortement augmentée du fait de la présence de la bande de renfort 7.

Le démontage et le montage de la toile sur le cadre sont simplifiés au niveau du raccord car l'épaisseur de l'ensemble harpon surmonté de la bande 7 est moins important que celle du raccord de l'art antérieur, à double épaisseur de partie mince de harpon.

La fixation des harpons adjacents bord à bord et non l'un sur l'autre garantit une continuité visuelle du fait de l'absence d'une double épaisseur de partie mince de harpon au niveau du raccord.

Tout type de matériau présentant une température de fusion inférieure ou égale à celle du harpon et avec des propriétés mécaniques de résistance à la traction supérieure à la toile, peut convenir pour la réalisation de la bande de raccordement des deux harpons. Un matériau plastique, thermoplastique et notamment le PVC à haute résistance mécanique est particulièrement adapté pour la constitution de la bande. Cette bande est différente, au niveau de sa matière, de la toile et du harpon servant à fabriquer le plafond tendu.

Dans le mode de réalisation précédemment décrit, la structure représentée comprend une toile pourvue de deux harpons successifs. Il est bien entendu évident que l'invention ne se limite pas à cette configuration et qu'il peut être prévu plus deux harpons successifs selon la taille de la toile à fixer. Dans ce cas, la bande de renfort pourra être dimensionnée pour venir à cheval sur deux ou plus de deux harpons. De même, on comprend que selon les dimensions de la bande de renfort et le nombre de harpons successifs, le raccord des harpons pourra être réalisé au moyen d'une ou plusieurs bande(s) de renfort.

L'invention est décrite dans ce qui précède à titre d'exemple. Il est entendu que l'homme du métier est à même de réaliser différentes variantes de réalisation de l'invention sans pour autant sortir du cadre de l'invention telle que définie dans les revendications annexées.

## Revendications

1. Nappe pour structure à toiles tendues de réalisation d'un faux plafond ou d'un caisson suspendu dans un local, comprenant au moins une toile souple (2) et au moins deux harpons (B) fixés le long d'un bord périphérique de la toile en étant adjacents l'un à l'autre, ces harpons étant destinés à fixer la toile à un cadre, **caractérisée en ce qu'**elle comprend une bande de renfort (7) fixée à cheval sur les deux harpons qui sont juxtaposés l'un contre l'autre.

2. Nappe selon la revendication 1, **caractérisée en ce que** la bande de renfort est constituée en un matériau présentant une température de fusion inférieure ou égale à celle des deux harpons (B) et avec des propriétés mécaniques de résistance à la traction supérieure à celle de la toile.

3. Nappe selon la revendication 1, **caractérisée en ce que** la bande de renfort est soudée aux harpons.

4. Structure à toiles tendue de réalisation d'un faux plafond ou d'un caisson suspendu dans un local, comprenant au moins un cadre et une nappe selon l'une des revendications précédentes, les harpons de la nappe s'engageant dans des éléments complémentaires du cadre pour tendre la toile vis à vis du cadre.

5. Procédé de fabrication d'une nappe pour structure à toiles tendues de réalisation d'un faux plafond ou d'un caisson suspendu dans un local, la nappe comprenant au moins une toile souple (2) et au moins deux harpons (B) fixés le long d'un bord périphérique de la toile en étant adjacents l'un à l'autre, ces harpons étant destinés à fixer la toile à un cadre, dans lequel :
- on positionne bord à bord les deux harpons en les disposant le long du bord périphérique de la toile
- on positionne une bande de renfort à cheval sur les deux harpons adjacents, la bande étant constituée en un matériau présentant une température de fusion inférieure ou égale à celle des deux harpons (B) et avec des propriétés mécaniques de résistance à la traction supérieure à celle de la toile,
- on soude dans une même opération la toile, les deux harpons et la bande.

6. Procédé selon la revendication 5, dans lequel l'opération de soudage est un soudage haute fréquence, les deux harpons, la toile et la bande étant disposés au sein d'une machine haute fréquence.

## Patentansprüche

1. Lage für eine Spanngewebestruktur zur Herstellung einer Zwischendecke oder eines Hängekastens in einem Raum, die mindestens ein flexibles Gewebe (2) und mindestens zwei Haken (B) umfasst, die entlang einer um das Gewebe umlaufenden Kante nebeneinander befestigt sind, wobei die Haken dazu bestimmt sind, das Gewebe an einem Rahmen zu befestigen, **dadurch gekennzeichnet, dass** sie ein Verstärkungsband (7) umfasst, das auf den beiden nebeneinander angeordneten Haken seitlich umschließend befestigt wird.

2. Lage nach Anspruch 1, **dadurch gekennzeichnet, dass** das Verstärkungsband aus einem Material mit einer Schmelztemperatur kleiner/gleich der Schmelztemperatur der beiden Haken (B) besteht und dessen mechanische Zugfestigkeit größer ist als die des Gewebes.

3. Lage nach Anspruch 1, **dadurch gekennzeichnet, dass** das Verstärkungsband auf die Haken geschweißt ist.

4. Spanngewebestruktur zur Herstellung einer Zwischendecke oder eines Hängekastens in einem Raum, die mindestens einen Rahmen und eine Lage nach einem der vorhergehenden Ansprüche umfasst, wobei die Haken der Lage in zusätzliche Rahmenelemente eingreifen, um die Lage in Bezug auf den Rahmen zu spannen.

5. Verfahren zur Anfertigung einer Spanngewebestruktur zur Herstellung einer Zwischendecke oder eines Hängekastens in einem Raum, die mindestens ein flexibles Gewebe (2) und mindestens zwei Haken (B) umfasst, die entlang einer um das Gewebe umlaufenden Kante nebeneinander befestigt sind, wobei diese Haken dazu bestimmt sind, am Gewebe eines Rahmens befestigt zu werden, indem:
- man die beiden Haken entlang der um das Gewebe umlaufenden Kante nebeneinander positioniert,
- man ein Verstärkungsband auf die beiden nebeneinander liegenden Haken seitlich umschließend auflegt, wobei das Band aus einem Material besteht, dessen Schmelztemperatur kleiner/gleich der Schmelztemperatur der beiden Haken (B) ist und dessen mechanische Zugfestigkeit größer ist als die des Gewebes,
- man das Gewebe, die beiden Haken und das Band in ein und demselben Vorgang miteinander verschweißt.

6. Verfahren nach Anspruch 5, in dem der Schweißvorgang eine Hochfrequenzschweißung ist, wobei die beiden Haken, das Gewebe und das Band in der Hochfrequenzmaschine angeordnet werden.

## Claims

1. Sheet for a stretched-canvas structure to make a false ceiling or a dropped ceiling box in a room, comprising at least one flexible canvas (2) and at least two harpoons (B) fixed along a peripheral edge of the canvas adjacent to each other, these harpoons intended to fix the canvas to a frame, **characterised in that** the sheet comprises a reinforcing strip (7) fixed astride the two harpoons which are juxtaposed against each other.

2. Sheet according to claim 1, **characterised in that** the reinforcing strip is made of a material with a melting temperature lower than or equal to that of the two harpoons (B) and with mechanical properties of higher tensile strength than that of the canvas.

3. Sheet according to claim 1, **characterised in that** the reinforcing strip is welded to the harpoons.

4. A stretched-canvas structure to make a false ceiling or a dropped ceiling box in a room, comprising at least a frame and a sheet according to one of the previous claims, the harpoons of the sheet engaging in complementary elements of the frame to stretch the canvas in relation to the frame.

5. Method to manufacture a sheet for a stretched-canvas structure to make a false ceiling or a dropped ceiling box in a room, the sheet comprising at least one flexible canvas (2) and at least two harpoons (B) fixed along a peripheral edge of the canvas and adjacent to each other, these harpoons being intended to fix the canvas to a frame, in which:
- the two harpoons are positioned side by side along the peripheral edge of the canvas
- a reinforcing strip is positioned astride the two adjacent harpoons, the strip being made of a material with a melting temperature lower than or equal to that of the two harpoons (B) and with mechanical properties of higher tensile strength than that of the canvas,
- the canvas, the two harpoons and the reinforcing strip are welded together in the same operation.

6. A method according to claim 5, in which the welding operation is high-frequency welding, the two harpoons, the canvas and the reinforcing strip being arranged in a high-frequency machine.
